# EUROPEAN PATENT SPECIFICATION

(11) **EP 2 055 989 B1**
(45) Date of publication and mention of the grant of the patent: **15.12.2010**
(21) Application number: 07119482.3
(22) Date of filing: 29.10.2007
(51) Int. Cl.: F16H 3/093

(54) **A double clutch transmission**
Doppelkupplungsgetriebe
Transmission à embrayage double

(43) Date of publication of application: 06.05.2009
(73) Proprietor: Ford Global Technologies, LLC, Dearborn, MI 48126 (US)
(72) Inventor: Stenvall, Lars, 459 91 Ljungskile (SE); Dzafic, Ahmet, 431 59 Mölndal (SE)
(74) Representative: Holmberg, Magnus

(56) References cited:
- EP-A- 0 083 747
- EP-A- 1 013 965
- EP-A- 1 731 794
- WO-A-2007/020431
- DE-A1- 19 923 185
- FR-A- 2 848 629

## Description

### Technical Field

The present invention relates to a double clutch transmission for a motor vehicle, especially for a car for use on conventional roads, comprising an inner first input shaft and an outer second input shaft disposed coaxially to each other and adapted for rotation, and two output shafts. A number of driving gearwheels are carried by the input shafts and adapted for rotation therewith, and a number of driven gearwheels are freely rotatably mounted on the output shafts, each driven gearwheel being arranged to be driven to rotate by a corresponding driving gearwheel for attaining a specific gear. Two of the driving gearwheels are each driving two driven gearwheels.

### Background of the Invention

A typical double clutch transmission, also called a dual-clutch or twin-clutch transmission, comprises first and second input shafts, an inner input shaft and an outer input shaft which are disposed coaxially to each other and adapted to be selectively coupled to a drive shaft of the vehicle by means of first and second friction clutches. First and second output shafts are arranged parallel to the two input shafts. A first set of driving gearwheels associated with odd gears are mounted on the first input shaft so as to rotate therewith, and a second set of driving gearwheels associated with even gears are mounted on the second input shaft so as to rotate therewith. A plurality of driven gearwheels are freely rotatably mounted on the output shafts and adapted to mesh permanently with a corresponding driving gearwheel for attaining a specific gear, and coupling means, such as sliding/engaging sleeves, are provided for connecting the driven gearwheels for rotation with the respective output shaft.

US 4 738 149, US-A1-2006/0278028 and US-A1-2006/0266144 disclose variations of a double clutch transmission.

US-A1-2006/0169078 A1 discloses a double clutch transmission, where one disclosed object is to reduce the overall size as much as possible so that the transmission can be mounted on a front-wheel-drive vehicle of an engine of transverse type. It is disclosed that one and the same driving gearwheel is adapted to drive two different driven gearwheels for a sixth gear and a fourth gear, i.e. a so called "double dependency" is provided.

One way to further reduce the dimensions of a double clutch transmission is to provide the transmission with two driving gearwheels each driving two driven gearwheels, i.e. two double dependencies.

It is known to be difficult to construct a transmission having two double dependencies, which has both very advantageous ratio steps and a compact overall size.

WO-A1-2006/106534 and US-A1-2005/0000307 disclose a double clutch transmission having two double dependencies realized by a driving gearwheel mounted on the inner input shaft adapted to drive two driven gearwheels for a third and a fifth gear, respectively, and another driving gearwheel mounted on the outer input shaft adapted to drive two driven gearwheels for a fourth and a sixth gear, respectively. The purpose of both transmissions is to provide a more compact structure, especially a reduced axial length.

However, the transmission configurations suggested in WO-A1-2006/106534 and US-A1-2005/0000307, can not achieve a transmission which is as compact as requested or which provides ratio steps adapted to cars for use on conventional roads.

Each of WO 2007/020431-A1 and FR 2 848 629-A1 discloses a double clutch transmission having two driving gearwheels each driving two driven gearwheels, i.e. two double dependencies, and a driving gearwheel, which drives the driven gearwheel for the reverse gear, mounted on the inner input shaft.

WO 2007/020431 is considered the closest prior art and shows a double clutch transmission according to the preamble of independent claim 1.

### The Object of the Invention

The object of the present invention is thus to provide an improved double clutch transmission comprising two driving gearwheels each driving two driven gearwheels. Further, the object of the present invention is to provide a double clutch transmission comprising two driving gearwheels each driving two driven gearwheels, which has a compact structure and at the same time provides very advantageous ratio steps.

### Summary of the Invention

The above mentioned objects are achieved by providing a double clutch transmission comprising:
an inner first input shaft and an outer second input shaft disposed coaxially to each other and adapted for rotation;
a first and a second clutch connectable to a drive shaft of an engine, the first clutch being arranged to drive the first input shaft and the second clutch being arranged to drive the second input shaft;
a first output shaft and a second output shaft adapted for rotation;
a first set of driving gearwheels carried by the first input shaft and adapted for rotation therewith;
a second set of driving gearwheels carried by the second input shaft and adapted for rotation therewith;
a first set of driven gearwheels freely rotatably mounted on the first output shaft, each arranged to be driven to rotate by a corresponding driving gearwheel for attaining a specific gear; and
a second set of driven gearwheels freely rotatably mounted on the second output shaft, each arranged to be driven to rotate by a corresponding driving gearwheel for attaining a specific gear;
the first set of driving gearwheels comprising a first driving gearwheel associated with a first gear, and a second driving gearwheel associated with two gears;
the second set of driving gearwheels comprising a third driving gearwheel associated with two gears, and a fourth driving gearwheel associated with at least one gear;
the first set of driven gearwheels comprising a first driven gearwheel adapted to mesh with the second driving gearwheel, and a second driven gearwheel adapted to mesh with the third driving gearwheel;
the second set of driven gearwheels comprising a third driven gearwheel adapted to mesh with the first driving gearwheel for the first gear, a fourth driven gearwheel adapted to mesh with the second driving gearwheel, and a fifth driven gearwheel adapted to mesh with the third driving gearwheel, wherein the first set of driving gearwheels comprises a driving gearwheel associated with a reverse gear, and the first set of driven gearwheels comprises a sixth driven gearwheel adapted to be indirectly driven to rotate by the driving gearwheel associated with the reverse gear for attaining the reverse gear, wherein the fourth driving gearwheel is associated with a second gear, and wherein the second set of driven gearwheels comprises a seventh driven gearwheel adapted to mesh with the fourth driving gearwheel for the second gear.

By the wording "for attaining a gear" is meant "for carrying out driving at a gear".

The sixth driven gearwheel can be indirectly driven to rotate by the driving gearwheel associated with the reverse gear via a sub shaft which is also arranged in parallel with the first and second input shafts. This sub shaft can be provided with one or two sub gearwheels adapted to mesh with the driving gearwheel associated with the reverse gear and the sixth driven gearwheel, respectively. By the sub shaft, a reverse direction of rotation of the first output shaft is attained.

The driven gearwheels are freely rotatably mounted on the output shafts so that each driven gearwheel is lockable to the respective output shaft when driven to rotate for attaining its specific gear, and freely rotatable in relation to the output shaft when its specific gear is not used.

The structure of the transmission according to the present invention provides a shorter centre-to-centre distance between the axis of the input shafts and the axis of the two output shafts in relation to prior art double clutch transmissions having two driving gearwheels each driving two driven gearwheels, i.e. two double dependencies, and provides, at the same time, very advantageous ratio steps. Hereby, a very advantageous and compact double clutch transmission with two double dependencies is attained. Since the driving gearwheel, which drives the driven gearwheel for the reverse gear, is mounted on the inner first input shaft, instead of being mounted on the outer second input shaft as disclosed in prior art, this driving gearwheel can be given small enough dimensions to match the first gear ratio. This provides an excellent gear ratio between first gear and reverse gear, which has been shown by tests conducted by the inventors. If the driven gearwheel for the reverse gear is driven by a driving gearwheel mounted on the outer second input shaft, as suggested in the above-mentioned prior art, small enough dimensions can not be attained with regard to the driving gearwheel for the reverse gear. Further, since the driven gearwheel for the reverse gear is freely rotatably mounted on the first output shaft, the amount of coupling devices, such as coupling/sliding/engaging sleeves is kept at a minimum, i.e. two coupling devices on each output shaft, and thus the axial length of the transmission is also kept at a minimum. By means of the transmission configuration of the present invention, an advantageous combination of final gear ratios and centre-to-centre distances between the input shafts and the output shafts can be selected which enables a compact overall size. The transmission of the present invention is advantageous for transverse power train installations.

According to an advantageous embodiment of the present invention, the first driving gearwheel forms the driving gearwheel associated with the reverse gear. By designing the first driving gearwheel to drive both the third and the sixth driven gearwheel to rotate, a strong and compact transmission design is provided, which provides very advantageous ratio steps.

According to a further advantageous embodiment of the present invention, where the first driving gearwheel forms the driving gearwheel associated with the reverse gear, the second driving gearwheel is positioned between the third driving gearwheel and the first driving gearwheel which is positioned adjacent to a bearing of the first input shaft. This design enhances the first input shaft's resistance to bending since the first driving gearwheel is positioned adjacent to the bearing of the first input shaft.

According to another advantageous embodiment of the present invention, the first set of driving gearwheels comprises a fifth driving gearwheel associated with the reverse gear, and the sixth driven gearwheel is adapted to be driven to rotate by the fifth driving gearwheel for the reverse gear.

According to yet another advantageous embodiment of the present invention, where the first set of driving gearwheels comprises a fifth driving gearwheel associated with the reverse gear, the diameter of the fifth driving gearwheel associated with the reverse gear is smaller than the diameter of the first driving gearwheel associated with the first gear. Hereby, a ratio difference between the first gear and the reverse gear is provided, which gives a further advantageous ratio step when shifting between first gear and reverse gear.

According to still another advantageous embodiment of the present invention, where the first set of driving gearwheels comprises a fifth driving gearwheel associated with the reverse gear, the fifth driving gearwheel is positioned between the first driving gearwheel and a bearing of the first input shaft, and the fifth driving gearwheel is adjacent to both the first driving gearwheel and the bearing of the first input shaft. Hereby, the driving gear wheels associated with both the reverse gear and the first gear are positioned adjacent to a bearing position. This design also enhances the first input shaft's resistance to bending since the driving gear wheels associated with both the reverse gear the first gear are positioned adjacent to the bearing position.

According to an advantageous embodiment of the present invention, the third driving gearwheel is associated with a fourth gear and a sixth gear.

According to a further advantageous embodiment of the present invention, where the third driving gearwheel is associated with a fourth gear and a sixth gear, the fifth driven gearwheel is adapted to mesh with the third driving gearwheel for the fourth gear, and the second driven gearwheel is adapted to mesh with the third driving gearwheel for the sixth gear. Tests conducted by the inventors have shown that this structure gives very advantageous ratio steps when shifting between all gears, resulting in smooth shifting, and that this structure also contributes to the compactness of the transmission.

According to another advantageous embodiment of the present invention, the second driving gearwheel is associated with a third gear and a fifth gear.

According to a further advantageous embodiment of the present invention, where the second driving gearwheel is associated with a third gear and a fifth gear, the fourth driven gearwheel is adapted to mesh with the second driving gearwheel for the third gear, and the first driven gearwheel is adapted to mesh with the second driving gearwheel for the fifth gear. Tests performed by the inventors have shown that this structure gives even more advantageous ratio steps when shifting between all gears, resulting in even more smooth shifting, especially for cars driven on conventional roads, and that this structure further contributes to the compactness of the transmission.

According to the present invention, the fourth driving gearwheel is associated with a second gear, and the second set of driven gearwheels comprises a seventh driven gearwheel adapted to mesh with the fourth driving gearwheel for the second gear. Tests conducted by the inventors have shown that this configuration and position of the second gear gives very advantageous ratio steps when shifting between the first gear and the second gear, and when shifting between the second gear and the other gears, resulting in smooth shifting. This provision of the second gear, also contributes to the compactness of the transmission, and reduces the bending of the shafts, more precisely, the bending of the second output shaft.

According to yet another advantageous embodiment of the present invention, the transmission comprises a first output gearwheel carried by the first output shaft and adapted for rotation therewith, and a second output gearwheel carried by the second output shaft and adapted for rotation therewith, said output gearwheels being adapted to mesh with and drive a crown gearwheel of a differential, and the diameter of the first output gearwheel is different from the diameter of the second output gearwheel. Investigation by the inventors have shown that the difference in diameter between the first and second output gearwheels contributes to the attained short centre-to-centre distance between the axis of the input shafts and the axis of the output shafts.

According to an advantageous embodiment of the present invention, where the transmission comprises the features of the latter mentioned embodiment, the diameter of the first output gearwheel is larger than the diameter of the second output gearwheel. Tests performed by the inventors have shown that this relationship provides an excellent compactness and, at the same time, very advantageous ratio steps.

According to a further advantageous embodiment of the present invention, where the diameter of the first output gearwheel is larger than the diameter of the second output gearwheel, the centre-to-centre distance between the axis of the input shafts and the axis of the first output shaft is larger than the centre-to-centre distance between the axis of the input shafts and the axis of the second output shaft. Hereby, a short centre-to-centre distance between the axis of the input shafts and the axis of the crown gearwheel shaft is provided, and also the ratio steps are improved, which has been shown in tests performed by the inventors.

The above-mentioned embodiments may be combined where suitable.

Further advantageous aspects of the transmission according to the present invention emerge from the dependent claims and the detailed description of referred embodiments.

The transmission of the present invention disclosed above, can also be provided with one or several additional gears, or be modified in other ways, without departing from the scope of the present invention as defined in the enclosed claims.

### Brief Description of the Drawings

The present invention will now be described, for exemplary purposes, in more detail by way of embodiments and with reference to the enclosed drawings, in which:
- Fig. 1: is a schematic end view of a transmission according to the present invention, illustrating the arrangement of the shafts of embodi- ments of the transmission according to the present invention,
- Fig. 2: is a diagrammatic representation of a first embodiment of the transmission according to the present invention along the line II-II in Fig. 1,
- Fig. 3: is a partial diagrammatic representation of the embodiment of Fig. 2 along the line III-III in Fig. 1,
- Fig. 4: is a diagrammatic representation of a second embodiment of the transmission according to the present invention along the line II-II in Fig. 1,
- Fig. 5: is a partial diagrammatic representation of the embodiment of Fig. 4 along the line III-III in Fig. 1, and
- Fig. 6: is a diagrammatic representation of a third embodiment of the transmission according to the present invention along the line II-II in Fig. 1

### Detailed Description of Preferred Embodiments

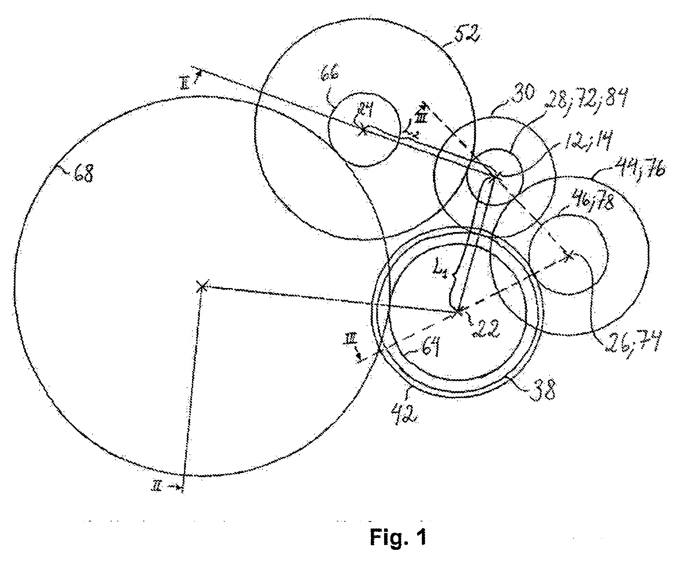

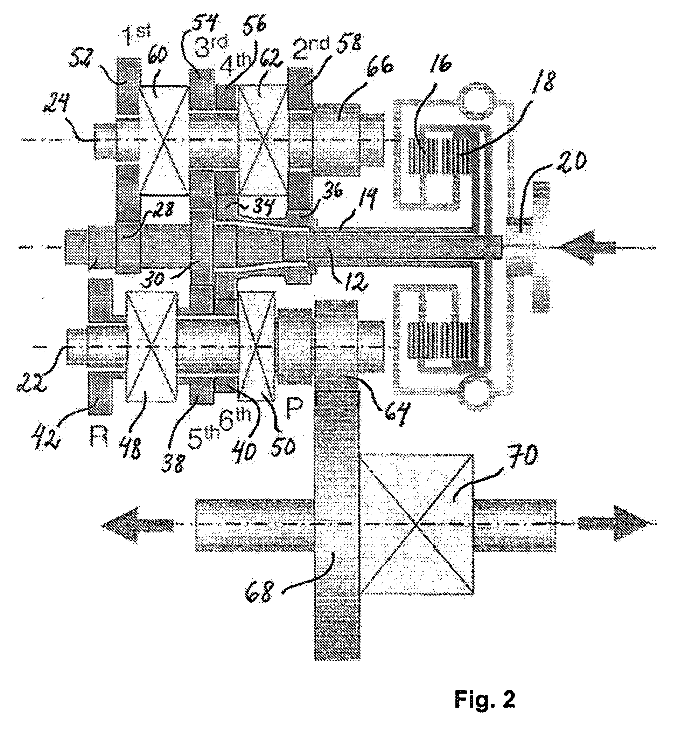

Fig. 1 is a schematic end view of a transmission according to the present invention, illustrating the arrangement of the shafts of the embodiments of Figs. 2, 4, and 6. This end view is schematic and, inter alia, does not show all the gearwheels of the different embodiments.

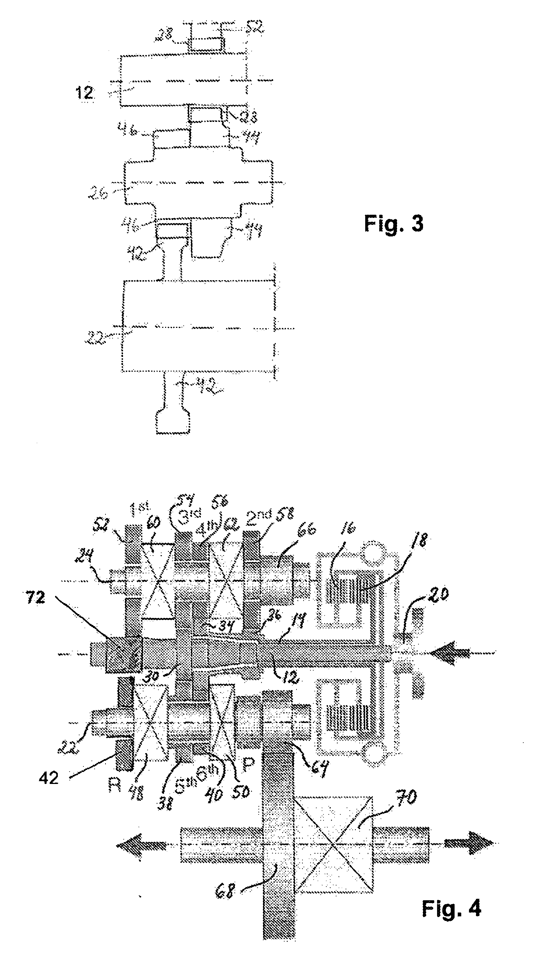

Fig. 2 shows a diagrammatic representation of an embodiment of the double clutch transmission according to the present invention along the line II-II in Fig. 1. The transmission comprises an inner first input shaft 12 and an outer second input shaft 14 disposed coaxially to each other and adapted for rotation. The second input shaft 14 is in the form of a hollow shaft concentric with the first input shaft 12, thus the first and second input shafts 12, 14 have a common axis. A first and a second clutch 16, 18 connectable to a drive shaft 20, known as the crank shaft, of an engine are provided, the first clutch 16 being arranged to drive the first input shaft 12, whereby power from the engine is transmitted to the first input shaft 12 via the first clutch 16, and the second clutch 18 being arranged to drive the second input shaft 14, whereby power from the engine is transmitted to the second input shaft 14 via the second clutch 18. A first output shaft 22 and a second output shaft 24 are arranged in parallel with the first and second input shafts 12, 14 and are adapted for rotation.
Further, the embodiment of Fig 2 is provided with a sub shaft 26 which is also arranged in parallel with the first and second input shafts 12, 14. This sub shaft 26 is not shown in Fig. 2, but is shown in Fig. 1, and will be explained in more detail in connection with Fig. 3. By the sub shaft 26, a reverse direction of rotation of the first output shaft 22 is attained.

A first set of driving gearwheels 28, 30 are carried by the first input shaft 12 and non-rotatably situated upon the first input shaft 12, and adapted for rotation therewith. The first set of driving gearwheels 28, 30 includes a first driving gearwheel 28 associated with a first gear *1^{st}* and a reverse gear (*R*) and a second driving gearwheel 30 associated with a third gear *3^{rd}* and a fifth gear *5^{th}*.

A second set of driving gearwheels 34, 36 are carried by the second input shaft 14 and non-rotatably situated upon the second input shaft 14 and adapted for rotation therewith. The second set of driving gearwheels 34, 36 includes a third driving gearwheel 34 associated with a fourth gear *4^{th}* and a sixth gear *6^{th}*, and a fourth driving gearwheel 36 associated with a second gear *2^{nd}*.

In this embodiment, in the axial direction of the transmission, the fourth driving gearwheel 36 is located between the third driving gearwheel 34 and the set of clutches 16, 18, the third driving gearwheel 34 is located between the second driving gearwheel 30 and the fourth driving gearwheel 36 and, and the second driving gearwheel 30 is located between the first driving gearwheel 28 and the third driving gearwheel 34.

A first set of driven gearwheels 38, 40, 42 are freely rotatably mounted on the first output shaft 22, i.e. designed as idler gearwheels, each arranged to be driven to rotate by a corresponding driving gearwheel 28, 30, 34 for attaining a specific gear, i.e. for carrying out driving at a specific gear or speed. Thus, each driven gearwheel 38, 40, 42 of the first set is lockable to the first output shaft 22 when driven to rotate for attaining its specific gear, and freely rotatable in relation to the first output shaft 22 when its specific gear is not used. The first set of driven gearwheels 38, 40, 42 includes a first driven gearwheel 38 adapted to mesh with the second driving gearwheel 30 for the fifth gear *5^{th}*, a second driven gearwheel 40 adapted to mesh with the third driving gearwheel 34 for the sixth gear *6^{th}*, and a sixth driven gearwheel 42 adapted to be indirectly driven to rotate by the first driving gearwheel 28 for the reverse gear R.

The first driving gearwheel 28 is adapted to indirectly drive the sixth driven gearwheel 42 via the sub shaft 26 which is schematically illustrated in Fig. 3. As can be seen in Fig. 3, the first driving gearwheel 28 is adapted to mesh with a driven sub gearwheel 44 carried by the sub shaft 26 and non-rotatably situated upon the sub shaft 26 and adapted for rotation therewith. A driving sub gearwheel 46 is also carried by the sub shaft 26 and non-rotatably situated upon the sub shaft 26 and adapted for rotation therewith, and the driving sub gearwheel 46 is adapted to mesh with the sixth driven gearwheel 42. Herein, the driven sub gearwheel 44 is positioned between the sixth driven gearwheel 42 and the first driven gearwheel 38.

The first driven gearwheel 38 and the sixth driven gearwheel 42 are alternately lockable to the first input shaft 22 by means of a first engaging sleeve 48 which is axially displaceable but non-rotatable in relation to the first input shaft 22. The second driven gearwheel 40 is lockable to the first input shaft 22 by means of a second engaging sleeve 50 which is axially displaceable but non-rotatable in relation to the first input shaft 22.

A second set of driven gearwheels 52, 54, 56, 58 are freely rotatably mounted on the second output shaft 24, i.e. designed as idler gearwheels, each arranged to be driven to rotate by a corresponding driving gearwheel 28, 30, 34, 36 for attaining a specific gear. Thus, each driven gearwheel 52, 54, 56, 58 of the second set is lockable to the second output shaft 24 when driven to rotate for attaining its specific gear, and freely rotatable in relation to the second output shaft 24 when its specific gear is not used. The second set of driven gearwheels 52, 54, 56, 58 comprises a third driven gearwheel 52 adapted to mesh with the first driving gearwheel 28 for the first gear *1^{st}*, a fourth driven gearwheel 54 adapted to mesh with the second driving gearwheel 30 for the third gear *3^{rd}*, a fifth driven gearwheel 56 adapted to mesh with the third driving gearwheel 34 for the fourth gear *4^{th}*, and a seventh driven gearwheel 58 adapted to mesh with the fourth driving gearwheel 36 for the second gear *2^{nd}*. Alternatively, the seventh driven gearwheel 58, associated with the second gear *2^{nd}*, could be freely rotatably mounted on the first output shaft 22.

The third driven gearwheel 52 and the fourth driven gearwheel 54 are alternately lockable to the second input shaft 24 by means of a third engaging sleeve 60 which is axially displaceable but non-rotatable in relation to the second input shaft 24. The fifth driven gearwheel 56 and the seventh driven gearwheel 58 are alternately lockable to the second input shaft 24 by means of a fourth engaging sleeve 62 which is axially displaceable but non-rotatable in relation to the second input shaft 24. The engaging sleeves 48, 50, 60, 62 are designed and work in a known manner.

The shifting between the gears is performed by controlling the displacement of said engaging sleeves 48, 50, 60, 62, which is effected in a know manner. The engaging sleeves can be replaced by any other coupling means without departing from the scope of the present invention as defined in the enclosed claims.

A first output gearwheel 64 is carried by the first output shaft 22, and non-rotatably situated upon the first output shaft 22 and adapted for rotation therewith. A second output gearwheel 66 is carried by the second output shaft 24 and non-rotatably situated upon the second output shaft 22 and adapted for rotation therewith. The output gearwheels 64, 66 are adapted to mesh with and drive a crown gearwheel 68 of a differential 70. Advantageously, the diameter of the first output gearwheel 64 is larger than the diameter of the second output gearwheel 66. The inventors have found that the 5^{th} and 6^{th} gears need a relatively large output gearwheel 64 to achieve total ratio (low numerical ratio), and at the same time, the 1^{st} and 2^{nd} gears need a relatively small output gearwheel 66 to achieve total ratio (high numerical ratio).

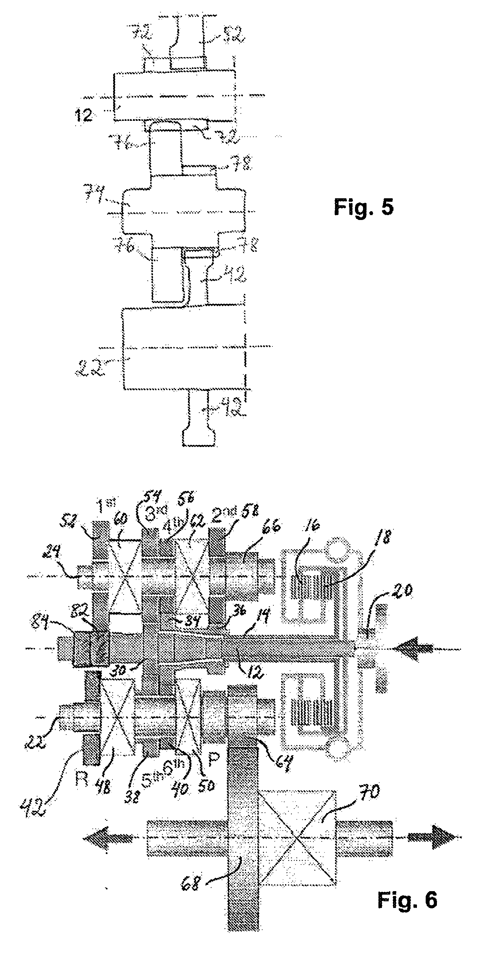

Fig. 4 shows a diagrammatic representation of a second embodiment of the double clutch transmission according to the present invention along the line II-II in Fig. 1. The second embodiment generally corresponds to the first embodiment of Fig. 2, the features of the second embodiment which correspond to the features of the first embodiment being provided with the same reference numbers, with the exception of the following differences: The second embodiment of Fig. 4 is provided with a first driving gearwheel 72 having an axial length which is longer the axial length of the first driving gearwheel 28 of the first embodiment. As can be seen in Fig. 5, which illustrates the sub shaft of the second embodiment, the second embodiment is also provided with a modified sub shaft 74. The first driving gearwheel 72 is adapted to mesh with a driven sub gearwheel 76 carried by the sub shaft 74 and non-rotatably situated upon the sub shaft 74 and adapted for rotation therewith. This driven sub gearwheel 76 is axially displaced from the third driven gearwheel 52. A driving sub gearwheel 78 is carried by the sub shaft 74 and non-rotatably situated upon the sub shaft 74 and adapted for rotation therewith, and the driving sub gearwheel 78 is adapted to mesh with the sixth driven gearwheel 42. Herein, the driving sub gearwheel 78 is positioned between the driven sub gearwheel 76 and the first driven gearwheel 38. Further, in this embodiment, the sixth driven gearwheel 42 is mounted in a positioned axially displaced towards the first driven gearwheel 38 compared to the embodiment of Fig. 2.

Fig. 6 shows a diagrammatic representation of a third embodiment of the double clutch transmission according to the present invention along the line II-II in Fig. 1. This third embodiment can be seen as a variation of the embodiment of Fig. 4 and generally corresponds to it, but herein, the axially extended first driving gearwheel is formed as two separate driving gearwheels 82, 84 providing a first driving gearwheel 82 associated with the first gear *1^{st}* and adapted to mesh with and drive the third driven gearwheel 52, and a fifth driving gearwheel 84 included in the first set of driving gearwheel 30, 82, 84 and associated with a reverse gear (*R*). Thus, the sixth driven gearwheel 42 is adapted to be indirectly driven to rotate by this fifth driving gearwheel 84 for the reverse gear (*R*). This third embodiment comprises a sub shaft corresponding to the sub shaft 74 of the second embodiment, via which sub shaft the fifth driving gearwheel 84 is adapted to drive the sixth driven gearwheel 42 to rotate. The fifth driving gearwheel 84 is positioned between and adjacent to the first driving gearwheel 82 and a bearing (not shown) which supports the first input shaft 12 at one end of the shaft 12. The diameter of the fifth driving gearwheel 84 associated with the reverse gear R can advantageously be smaller than the diameter of the first driving gearwheel 82 associated with the first gear *1^{st}*.

In the disclosed embodiments, the second driving gearwheel 30 is adapted to drive both the first and fourth driven gearwheels 38, 54 for the fifth and third gear *5^{th}*, *3^{rd}*, respectively. Alternatively, the first driven gearwheel 38 could be associated with the third gear, and the fourth driven gearwheel 54 could be associated with the fifth gear. The third driving gearwheel 34 is adapted to drive both the second and fifth driven gearwheels 40, 56 for the sixth and fourth gear *6^{th}*, *4^{rd}*, respectively. Alternatively, the second driven gearwheel 40 could be associated with the fourth gear, and the fifth driven gearwheel 56 could be associated with the sixth gear.

With reference to Fig. 1, the centre-to-centre distance L₁ between the axis of the input shafts 12, 14 and the axis of the first output shaft 22 is larger than the centre-to-centre distance L₂ between the axis of the input shafts 12, 14 and the axis of the second output shaft 24 in the shown embodiments. Hereby, a short centre-to-centre distance between the axis of the input shafts 12, 14 and the axis of the crown gearwheel shaft is provided, and also the ratio steps are improved, which has been shown in tests performed by the inventors.

## Claims

1. A double clutch transmission comprising:
an inner first input shaft (12) and an outer second input shaft (14) disposed coaxially to each other and adapted for rotation;
a first and a second clutch (16, 18) connectable to a drive shaft (20) of an engine, the first clutch (16) being arranged to drive the first input shaft (12) and the second clutch (18) being arranged to drive the second input shaft (14);
a first output shaft (22) and a second output shaft (24) adapted for rotation;
a first set of driving gearwheels (28, 30; 30, 72; 30, 82, 84) carried by the first input shaft (12) and adapted for rotation therewith;
a second set of driving gearwheels (34, 36) carried by the second input shaft (14) and adapted for rotation therewith;
a first set of driven gearwheels (38, 40, 42) freely rotatably mounted on the first output shaft (22), each arranged to be driven to rotate by a corresponding driving gearwheel (28, 30, 34; 30, 34, 72; 30, 34, 84) for attaining a specific gear; and
a second set of driven gearwheels (52, 54, 56, 58) freely rotatably mounted on the second output shaft (24), each arranged to be driven to rotate by a corresponding driving gearwheel (28, 30, 34, 36; 30, 34, 36, 72; 30, 34, 36, 82) for attaining a specific gear;
the first set of driving gearwheels (28, 30; 30, 72; 30, 82, 84) comprising a first driving gearwheel (28; 72; 82) associated with a first gear (*1^{st}*), and a second driving gearwheel (30) associated with two gears (*3^{rd}*, *5^{th}*);
the second set of driving gearwheels (34, 36) comprising a third driving gearwheel (34) associated with two gears (*4^{th}*, *6^{th}*), and a fourth driving gearwheel (36) associated with at least one gear (*2^{nd}*);
the first set of driven gearwheels (38, 40, 42) comprising a first driven gearwheel (38) adapted to mesh with the second driving gearwheel (30), and a second driven gearwheel (40) adapted to mesh with the third driving gearwheel (34);
the second set of driven gearwheels (52, 54, 56, 58) comprising a third driven gearwheel (52) adapted to mesh with the first driving gearwheel (28; 72; 82) for the first gear (*1^{st}*), a fourth driven gearwheel (54) adapted to mesh with the second driving gearwheel (30), and a fifth driven gearwheel (56) adapted to mesh with the third driving gearwheel (34);
the first set of driving gearwheels (28, 30; 30, 72; 30, 82, 84) comprising a driving gearwheel (28; 72; 84) associated with a reverse gear (*R*);
the first set of driven gearwheels (38, 40, 42) comprising a sixth driven gearwheel (42) adapted to be indirectly driven to rotate by the driving gearwheel (28; 72; 84) associated with the reverse gear (*R*) for attaining the reverse gear (*R*);
the fourth driving gearwheel (36) being associated with a second gear (*2^{nd}*), **characterized in that** the second set of driven gearwheels (52, 54, 56, 58) comprises a seventh driven gearwheel (58) adapted to mesh with the fourth driving gearwheel (36) for the second gear (*2^{nd}*).

2. A double clutch transmission according to claim 1, **characterized in that** the first driving gearwheel (28; 72) forms the driving gearwheel (28; 72) associated with the reverse gear (*R*).

3. A double clutch transmission according to claim 2, **characterized in that** the second driving gearwheel (30) is positioned between the third driving gearwheel (34) and the first driving gearwheel (28; 72) which is positioned adjacent to a bearing of the first input shaft (12).

4. A double clutch transmission according to claim 1, **characterized in that** the first set of driving gearwheels (30, 82, 84) comprises a fifth driving gearwheel (84) associated with the reverse gear (*R*), and **in that** the sixth driven gearwheel (42) is adapted to be driven to rotate by the fifth driving gearwheel (84) for the reverse gear (*R*).

5. A double clutch transmission according to claim 4, **characterized in that** the diameter of the fifth driving gearwheel (84) associated with the reverse gear (*R*) is smaller than the diameter of the first driving gearwheel (82) associated with the first gear (*1^{st}*).

6. A double clutch transmission according to claim 4 or 5, **characterized in that** the fifth driving gearwheel (84) is positioned between the first driving gearwheel (82) and a bearing of the first input shaft (12), and **in that** the fifth driving gearwheel (84) is adjacent to both the first driving gearwheel (82) and the bearing of the first input shaft (12).

7. A double clutch transmission according to any of the claims 1 to 6, **characterized in that** the third driving gearwheel (34) is associated with a fourth gear (*4^{th}*) and a sixth gear (*6^{th}*).

8. A double clutch transmission according claim 7, **characterized in that** the fifth driven gearwheel (56) is adapted to mesh with the third driving gearwheel (34) for the fourth gear (*4^{th}*), and **in that** the second driven gearwheel (40) is adapted to mesh with the third driving gearwheel (34) for the sixth gear (*6^{th}*).

9. A double clutch transmission according to any of the claims 1 to 8, **characterized in that** the second driving gearwheel (30) is associated with a third gear (*3^{rd}*) and a fifth gear (*5^{th}*).

10. A double clutch transmission according to claim 9, **characterized in that** the fourth driven gearwheel (54) is adapted to mesh with the second driving gearwheel (30) for the third gear (*3^{rd}*), and **in that** the first driven gearwheel (38) is adapted to mesh with the second driving gearwheel (30) for the fifth gear (*5^{th}*).

11. A double clutch transmission according to any of the claims 1 to 10, **characterized in that** the transmission comprises a first output gearwheel (64) carried by the first output shaft (22) and adapted for rotation therewith, and a second output gearwheel (66) carried by the second output shaft (24) and adapted for rotation therewith, **in that** said output gearwheels (64, 66) are adapted to mesh with and drive a crown gearwheel (68) of a differential (70), and **in that** the diameter of the first output gearwheel (64) is different from the diameter of the second output gearwheel (66).

12. A double clutch transmission according to claim 11, **characterized in that** the diameter of the first output gearwheel (64) is larger than the diameter of the second output gearwheel (66).

13. A double clutch transmission according to claim 12, **characterized in that** the centre-to-centre distance (L₁) between the axis of the input shafts (12, 14) and the axis of the first output shaft (22) is larger than the centre-to-centre distance (L₂) between the axis of the input shafts (12, 14) and the axis of the second output shaft (24).

## Patentansprüche

1. Doppelkupplungsgetriebe, das umfasst:
eine innere erste Eingangswelle (12) und eine äußere Eingangswehe (14), die koaxial zueinander angeordnet sind und für eine Drehung ausgelegt sind;
eine erste und eine zweite Kupplung (16, 18), die mit einer Antriebswelle (20) eines Motors verbunden werden können, wobei die erste Kupplung (16) dazu ausgelegt ist, die erste Eingangswelle (12) anzutreiben, und die zweite Kupplung (18) dazu ausgelegt ist, die zweite Eingangswelle (14) anzutreiben;
eine erste Ausgangswelle (22) und eine zweite Ausgangswelle (24), die für eine Drehung ausgelegt sind;
einen ersten Satz antreibender Zahnräder (28, 30; 30, 72; 30, 82, 84), die von der ersten Eingangswelle (12) getragen werden und für eine Drehung damit ausgelegt sind;
einen zweiten Satz antreibender Zahnräder (34, 36), die von der zweiten Eingangswelle (14) getragen werden und für eine Drehung damit ausgelegt sind;
einen ersten Satz angetriebener Zahnräder (38, 40, 42), die an der ersten Ausgangswelle (22) frei drehbar montiert sind und wovon jedes dazu ausgelegt ist, durch ein entsprechendes antreibendes Zahnrad (28, 30, 34; 30, 34, 72; 30, 34, 84) rotatorisch angetrieben zu werden, um einen bestimmten Gang zu erreichen; und
einen zweiten Satz angetriebener Zahnräder (52, 54, 56, 58), die an der zweiten Ausgangswelle (24) frei drehbar angebracht sind und wovon jedes dazu ausgelegt ist, durch ein entsprechendes antreibendes Zahnrad (28, 30, 34, 36; 30, 34, 36, 72; 30, 34, 36, 82) rotatorisch angetrieben zu werden, um einen bestimmten Gang zu erreichen;
wobei der erste Satz antreibender Zahnräder (28, 30; 30, 72; 30, 82, 84) ein erstes antreibendes Zahnrad (28; 72; 82), das einem ersten Gang (1.) zugeordnet ist, und ein zweites antreibendes Zahnrad (30), das zwei Gängen (3., 5.) zugeordnet ist, umfasst;
wobei der zweite Satz antreibender Zahnräder (34, 36) ein drittes antreibendes Zahnrad (34), das zwei Gängen (4., 6.) zugeordnet ist, und ein viertes antreibendes Zahnrad (36), das wenigstens einem Gang (2.) zugeordnet ist, umfasst;
wobei der erste Satz angetriebener Zahnräder (38, 40, 42) ein erstes angetriebenes Zahnrad (38), das dazu ausgelegt ist, mit dem zweiten antreibenden Zahnrad (30) zu kämmen, und ein zweites angetriebenes Zahnrad (40), das dazu ausgelegt ist, mit dem dritten antreibenden Zahnrad (34) zu kämmen, umfasst;
wobei der zweite Satz angetriebener Zahnräder (52, 54, 56, 58) ein drittes angetriebenes Zahnrad (52), das dazu ausgelegt ist, mit dem ersten antreibenden Zahnrad (28; 72; 82) für den ersten Gang (1.) zu kämmen, ein viertes angetriebenes Zahnrad (54), das dazu ausgelegt ist, mit dem zweiten antreibenden Zahnrad (30) zu kämmen, und ein fünftes angetriebenes Zahnrad (56), das dazu ausgelegt ist, mit dem dritten antreibenden Zahnrad (34) zu kämmen, umfasst;
wobei der erste Satz antreibender Zahnräder (28, 30, 30, 72; 30, 82, 84) ein antreibendes Zahnrad (28; 72; 84) umfasst, das einem Rückwärtsgang (R) zugeordnet ist;
wobei der erste Satz angetriebener Zahnräder (38, 40, 42) ein sechstes angetriebenes Zahnrad (42), das dazu ausgelegt ist, durch das antreibende Zahnrad (28; 72; 84), das dem Rückwärtsgang (R) zugeordnet ist, indirekt rotatorisch angetrieben zu werden, um den Rückwärtsgang (R) zu erreichen;
wobei das vierte antreibende Zahnrad (36) einem zweiten Gang (2.) zugeordnet ist, **dadurch gekennzeichnet, dass** der zweite Satz angetriebener Zahnräder (52, 54, 56, 58) ein siebtes angetriebenes Zahnrad (58) umfasst, das dazu ausgelegt ist, mit dem vierten antreibenden Zahnrad (36) für den zweiten Gang (2.) zu kämmen.

2. Doppelkupplungsgetriebe nach Anspruch 1, **dadurch gekennzeichnet, dass** das erste antreibende Zahnrad (28; 72) das antreibende Zahnrad (28; 72) bildet, das dem Rückwärtsgang (R) zugeordnet ist.

3. Doppelkupplungsgetriebe nach Anspruch 2, **dadurch gekennzeichnet, dass** das zweite antreibende Zahnrad (30) zwischen dem dritten antreibenden Zahnrad (34) und dem ersten antreibenden Zahnrad (28; 72), das benachbart zu einem Lager der ersten Eingangswelle (12) positioniert ist, positioniert ist.

4. Doppelkupplungsgetriebe nach Anspruch 1, **dadurch gekennzeichnet, dass** der erste Satz antreibender Zahnräder (30, 82, 84) ein fünftes antreibendes Zahnrad (84), das dem Rückwärtsgang (R) zugeordnet ist, umfasst und dass sechste angetriebene Zahnrad (42) dazu ausgelegt ist, durch das fünfte antreibende Zahnrad (84) für den Rückwärtsgang (R) rotatorisch angetrieben zu werden.

5. Doppelkupplungsgetriebe nach Anspruch 4, **dadurch gekennzeichnet, dass** der Durchmesser des fünften antreibenden Zahnrads (84), das dem Rückwärtsgang (R) zugeordnet ist, kleiner ist als der Durchmesser des ersten antreibenden Zahnrads (82), das dem ersten Gang (1.) zugeordnet ist.

6. Doppelkupplungsgetriebe nach Anspruch 4 oder 5, **dadurch gekennzeichnet, dass** das fünfte antreibende Zahnrad (84) zwischen dem ersten antreibenden Zahnrad (82) und einem Lager der ersten Eingangswelle (12) positioniert ist und dass das fünfte antreibende Zahnrad (84) benachbart sowohl zu dem ersten antreibenden Zahnrad (82) als auch zu dem Lager der ersten Eingangswelle (12) angeordnet ist.

7. Doppelkupplungsgetriebe nach einem der Ansprüche 1 bis 6, **dadurch gekennzeichnet, dass** das dritte antreibende Zahnrad (84) einem vierten Gang (4.) und einem sechsten Gang (6.) zugeordnet ist.

8. Doppelkupplungsgetriebe nach Anspruch 7, **dadurch gekennzeichnet, dass** das fünfte angetriebene Zahnrad (56) dazu ausgelegt ist, mit dem dritten antreibenden Zahnrad (34) für den vierten Gang (4.) zu kämmen, und dass das zweite angetriebene Zahnrad (40) dazu ausgelegt ist, mit dem dritten antreibenden Zahnrad (34) für den sechsten Gang (6.) zu kämmen.

9. Doppelkupplungsgetriebe nach einem der Ansprüche 1 bis 8, **dadurch gekennzeichnet, dass** das zweite antreibende Zahnrad (30) einem dritten Gang (3.) und einem fünften Gang (5.) zugeordnet ist.

10. Doppelkupplungsgetriebe nach Anspruch 9, **dadurch gekennzeichnet, dass** das vierte angetriebene Zahnrad (34) dazu ausgelegt ist, mit dem zweiten antreibenden Zahnrad (30) für den dritten Gang (3.) zu kämmen, und dass das erste angetriebene Zahnrad (38) dazu ausgelegt ist, mit dem zweiten angetriebenen Zahnrad (30) für den fünften Gang (5.) zu kämmen.

11. Doppelkupplungsgetriebe nach einem der Ansprüche 1 bis 10, **dadurch gekennzeichnet, dass** das Getriebe ein erstes Ausgangszahnrad (64), das von der ersten Ausgangswelle (22) getragen wird und für eine Drehung damit ausgelegt ist, und ein zweites Ausgangszahnrad (66), das durch die zweite Ausgangswelle (24) getragen wird und für eine Drehung damit ausgelegt ist, umfasst, dass die Ausgangszahnräder (64, 66) dazu ausgelegt sind, mit einem Antriebskegelrad (68) eines Differentials (70) zu kämmen und dieses anzutreiben, und dass der Durchmesser des ersten Ausgangszahnrads (64) von dem Durchmesser des zweiten Ausgangszahnrads (66) verschieden ist.

12. Doppelkupplungsgetriebe nach Anspruch 11, **dadurch gekennzeichnet, dass** der Durchmesser des ersten Ausgangszahnrads (64) größer ist als der Durchmesser des zweiten Ausgangszahnrads (66).

13. Doppelkupplungsgetriebe nach Anspruch 12, **dadurch gekennzeichnet, dass** der Mitte-Mitte-Abstand (L₁) zwischen der Achse der Eingangswellen (12, 14) und der Achse der ersten Ausgangswelle (22) größer ist als der Mitte-Mutte-Abstand (L₂) zwischen der Achse der Ausgangswellen (12, 14) und der Achse der zweiten Ausgangswelle (24).

## Revendications

1. Transmission à embrayage double, comprenant :
un premier arbre d'entrée (12) intérieur et un deuxième arbre d'entrée (14) extérieur, disposés coaxialement l'un par rapport à l'autre et adaptés pour pouvoir tourner ;
un premier et un deuxième embrayages (16, 18), susceptibles d'être connectés à un arbre d'entraînement (20) d'un moteur thermique, le premier embrayage (16) étant agencé pour entraîner le premier arbre d'entrée (12) et le deuxième embrayage (18) étant agencé pour entraîner le deuxième arbre d'entrée (14) ;
un premier arbre de sortie (22) et un deuxième arbre de sortie (24), adaptés pour pouvoir tourner ;
un premier jeu de roues dentées menantes (28, 30 ; 30, 72 ; 30, 82, 84) portées par le premier arbre d'entrée (12) et adaptées pour tourner avec lui ;
un deuxième jeu de roues dentées menantes (34, 36) portées par le deuxième arbre d'entrée (14) et adaptées pour tourner avec lui ;
un premier jeu de roues dentées menées (38, 40, 42) montées pour pouvoir tourner librement sur le premier arbre de sortie (22), chacune agencée pour être entraînée en rotation par une roue dentée menante (28, 30, 34 ; 30, 34, 72 ; 30, 34, 84) correspondante, pour obtenir un rapport de transmission spécifique ; et
un deuxième jeu de roues dentées menées (52, 54, 56, 58), montées pour pouvoir tourner librement sur le deuxième arbre de sortie (24), chacune agencée pour être entraînée en rotation par une roue dentée menante (28, 30, 34, 36 ; 30, 34, 36, 72 ; 30, 34, 36, 82) correspondante, pour obtenir un rapport de transmission spécifique;
le premier jeu de roues dentées menantes (28, 30 ; 30, 72 ; 30, 82, 84) comprenant une première roue dentée menante (28 ; 72 ; 82) associée à un premier rapport de transmission (1^{er}), et une deuxième roue dentée menante (30) associée à deux rapports de transmission (3^{ème}, 5^{ème}) ;
le deuxième jeu de roues dentées menantes (34, 36) comprenant une troisième roue dentée menante (34), associée à deux rapports de transmission (4^{ème}, 6^{ème}), et une quatrième roue dentée menante (36), associée à au moins un rapport de transmission (2^{ème}) ;
le premier jeu de roues dentées menées (38, 40, 42) comprenant une première roue dentée menée (38), adaptée pour s'engrener avec la deuxième roue dentée menante (30), et une deuxième roue dentée menée (40), adaptée pour s'engrener avec la troisième roue dentée menante (34) ;
le deuxième jeu de roues dentées menées (52, 54, 56, 58) comprenant une troisième roue dentée menée (52), adaptée pour s'engrener avec la première roue dentée menante (28 ; 72 ; 82) pour le premier rapport de transmission (1^{er}), une quatrième roue dentée menée (54), adaptée pour s'engrener avec la deuxième roue dentée menante (30), et une cinquième roue dentée menée (56), adaptée pour s'engrener avec la troisième roue dentée menante (34) ;
le premier jeu de roues dentées menantes (28, 30 ; 30, 72 ; 30, 82, 84) comprenant une roue dentée menante (28 ; 72 ; 84) associée à une marche arrière (R) ;
le premier jeu de roues dentées menées (38, 40, 42) comprenant une sixième roue dentée menée (42), adaptée pour être indirectement entraînée en rotation par la roue dentée menante (28 ; 72 ; 64) associée à la marche arrière (R), pour obtenir la marche arrière (R) ;
la quatrième roue dentée menante (36) étant associée à un deuxième rapport de transmission (2^{ème}), **caractérisée en ce que** le deuxième jeu de roues dentées menées (52, 54, 56, 58) comprend une septième roue dentée menée (58), adaptée pour s'engrener avec la quatrième roue dentée menante (36) pour le deuxième rapport de transmission (2^{ème}).

2. Transmission à embrayage double selon la revendication 1, **caractérisée en ce que** la première roue dentée menante (28 ; 72) forme la roue dentée menante (28 ; 72) associée à la marche arrière (R).

3. Transmission à embrayage double selon la revendication 2, **caractérisée en ce que** la deuxième roue dentée menante (30) est positionnée entre la troisième roue dentée menante (34) et la première roue dentée menante (28; 72), qui est positionnée de manière adjacente à un palier du premier arbre d'entrée (12).

4. Transmission à embrayage double selon la revendication 1, **caractérisée en ce que** le premier jeu de roues dentées menantes (30, 82, 84) comprend une cinquième roue dentée menante (84) associée à la marche arrière (R), et **en ce que** la sixième roue dentée menée (42) est adaptée pour être entraînée en rotation par la cinquième roue dentée menante (84) pour la marche arrière (R).

5. Transmission à embrayage double selon la revendication 4, **caractérisée en ce que** le diamètre de la cinquième roue dentée menante (84), associée à la marche arrière (R), est inférieur au diamètre de la première roue dentée menante (82) associée au premier rapport de transmission (1^{er}).

6. Transmission à embrayage double selon la revendication 4 ou 5, **caractérisée en ce que** la cinquième roue dentée menante (84) est positionnée entre la première roue dentée menante (82) et un palier du premier arbre d'entrée (12), et **en ce que** la cinquième roue dentée menante (84) est adjacente à la fois à la première roue dentée menante (82) et au palier du premier arbre d'entrée (12).

7. Transmission à embrayage double selon l'une quelconque des revendications 1 à 6, **caractérisée en ce que** la troisième roue dentée menante (34) est associée à un quatrième rapport de transmission (4^{ème}) est à un sixième rapport de transmission (6^{ème}).

8. Transmission à embrayage double selon la revendication 7, **caractérisée en ce que** la cinquième roue dentée menée (56) est adaptée pour s'engrener avec la troisième roue dentée menante (34) pour le quatrième rapport de transmission (4^{ème}), et **en ce que** la deuxième roue dentée menée (40) est adaptée pour s'engrener avec la troisième roue dentée menante (34) pour le sixième rapport de transmission (6^{ème}).

9. Transmission à embrayage double selon l'une quelconque des revendications 1 à 8, **caractérisée en ce que** la deuxième roue dentée menante (30) est associée à un troisième rapport de transmission (3^{ème}) et à un cinquième rapport de transmission (5^{ème}).

10. Transmission à embrayage double selon la revendication 9, **caractérisée en ce que** la quatrième roule dentée menée (54) est adaptée pour s'engrener avec la deuxième roue dentée menante (30) pour le troisième rapport de transmission (3^{ème}), et **en ce que** la première roue dentée menée (38) est adaptée pour s'engrener avec la deuxième roue dentée menante (30) pour le cinquième rapport de transmission (5^{ème}).

11. Transmission à embrayage double selon l'une quelconque des revendications 1 à 10, **caractérisée en ce que** la transmission comprend une première roue dentée de sortie (64), portée par le premier arbre de sortie (22) et adaptée pour tourner avec lui, et une deuxième roue dentée de sortie (66), portée pair le deuxième arbre de sortie (24) et adaptée pour tourner avec lui, **en ce que** lesdites roues dentées de sortie (64, 66) sont adaptées pour s'engrener avec et entraîner une couronne dentée (68) d'un différentiel (70), et **en ce que** le diamètre de la première roue dentée de sortie (64) est différent du diamètre de la deuxième roue dentée de sortie (66).

12. Transmission à embrayage double selon la revendication 11, **caractérisée en ce que** le diamètre de la première roue dentée de sortie (64) est plus grand que le diamètre de la deuxième roue dentée de sortie (66).

13. Transmission à embrayage double selon la revendication 12, **caractérisée en ce que** la distance d'entraxe (L₁) entre l'axe des arbres d'entrée (12, 14) et l'axe du premier arbre de sortie (22) est plus grande que la distance d'entraxe (L₂) entre l'axe des arbres d'entrée (12, 14) et l'axe du deuxième arbre de sortie (24).
